# EUROPEAN PATENT SPECIFICATION

(11) **EP 1 117 623 B1**
(45) Date of publication and mention of the grant of the patent: **10.03.2004**
(21) Application number: 99970651.8
(22) Date of filing: 29.09.1999
(51) Int. Cl.: C04B 28/24, C04B 28/26, C04B 18/16

(54) **AN ALKALI AND ACID RESISTANT COMPOSITION**
EINE BASEN- UND SÄURERESISTENTE ZUSAMMENSETZUNG
COMPOSITION RESISTANT AUX ALCALIS ET AUX ACIDES

(30) Priority: 02.10.1998 SE 9803347
(43) Date of publication of application: 25.07.2001
(73) Proprietor: Exxacon AB, 104 62 Stockholm (SE)
(72) Inventor: KARLSSON, Kjell, S-263 39 Höganäs (SE); NORRLÖW, Olof, S-251 09 Helsingborg (SE)
(74) Representative: Onn, Thorsten
(86) International application number: PCT/SE1999/001732
(87) International publication number: WO 2000/023396

(56) References cited:
- WO-A1-86/05478
- NL-A- 8 602 436
- US-A- 3 817 766
- US-A- 5 691 050
- DATABASE WPI Week 198525, Derwent Publications Ltd., London, GB; AN 1985-149066, XP002941251 & JP 60 081 055 A (MURATA T) 09 May 1985

## Description

The present invention relates to an alkali- and acid-resistant composition, suitable for use as floor levelling material and for building items.

### Background

Modem techniques for building houses include the use of a large number of materials and several layers of material are often used to achieve the desired durability, for example, bearing strength, combined with the desired surface properties such as structure and colour. A descriptive example of this is the case of floors, where a bearing concrete slab first has a levelling layer applied to it, which in turn is then painted or covered by a laminate. It is not uncommon for a completed floor to consist of several layers and to contain more than 20 components. It is clear that this "layer-upon-layer" technique may give rise to problems and that it increases the cost of building.

It is known that floors are involved in approximately 80 % of all cases of what are known as sick buildings. "Sick buildings" is a general concept which includes problems with residual moisture and mould, toxic or allergenic components of building material, poor ventilation, and other problems. Measures to correct errors that are, as it were, built into the building are difficult and expensive.

Currently, most floor levelling compounds that are used consist of a greater or lesser amount of organic substances such as polymers. These organic substances, either naturally or due to the high pH of the concrete, are broken down into volatile substances, a process that can be accelerated to a great extent by increased temperature, raising or lowering of the atmospheric humidity and the use of unsuitable cleaning agents. The advantages of these materials are that they are easy to apply, with the exception of aspects of worker safety, that they are easy to adapt with respect to surface and colour and that they have a high resistance to attack by chemicals and by water.

It can be said in summary that current floor levelling compounds that contain polymers and cement are a development of a conventional technique in which health effects have not been considered. Unfortunately, this technique is unsuitable for several reasons, as has been described above. The reason that these levelling compounds are needed at all is the fact that the concrete in the bearing floor itself, what is known as the "bearing layer", is usually very coarse with particles of a diameter which occasionally exceeds 30 mm. The surface is thus rough and uneven. This cannot be corrected during the actual pouring, since for reasons of durability such small fractions cannot be used as would be needed to achieve an even floor surface. Furthermore, for reasons of cost it is desired that the actual bearing layer is poured rapidly and that the framework of the building is completed rapidly. It is an advantage if the pouring of the bearing layer can lie a few floors ahead of the actual surface treatment.

SE 375 978 describes a method for the production of moulds, for example, building material where a silicate solution has been mixed with an ester, the ester functioning as a hardener. The addition of filler, such as sand, cement and other solid, inorganic or organic substances is mentioned. The use of reinforcement, called in the patent reinforcing elements, is also mentioned. The material that is obtained by means of the method for which a patent has been applied, however, has serious limitations as a building material.

The aim of this invention is thus to provide an environmentally and non-allergenic building material that in addition shows good mechanical and chemical durability, is easy to handle and competitive from the point of view of cost. It is a requirement that the material satisfies the conditions of the European Union for environmental classification of building material and that the material can be produced and applied according to ISO 14000. All components of the material should possess an environmental declaration and neither the manufacture, mixing nor application may give rise to environmentally damaging emissions.

### Summary of the invention

These aims are satisfied by the material according to the present invention, as defined in the accompanying claims. The invention in addition includes the production and use of this material and products made of this material.

### Description

The present invention provides a new building material with several applications. The present invention concerns an alkali- and acid-resistant composition, suitably intended for use as a floor levelling material or for building items, whereby the composition includes a ballast material, a cement component a hardener/hardener system and a silicate component. A distinguishing feature of the material is that it removes the problems associated with previous floor levelling materials and opens completely new possibilities for the production of building items, treatment of façades, insulation material, fire-protection material, etc. The material easily satisfies the following requirements: environmentally friendly manufacture, environmentally friendly components and final product, fire-safe final product, self-levelling, durable, resistant to chemicals, resistant to water, economical, can be applied within a wide range of thicknesses, from 1 mm up to 50 mm, long life-time, able to be coloured, can be walked on after a short time (in practice within an hour or so), fully hardened within a few days, provides a finished floor surface without further treatment, can be applied onto concrete, easy to repair and joint, and easy to clean.

The material according to the present invention includes the following components: Ballast; cement component; silicate component (such as alkali metal silicates) and suitably a hardener/hardener system, in which the ballast is the main load-bearing component, which is made possible by using such a particle size distribution that cubic close packing is achieved, in which the size of the spaces between the particles is minimised to less than 100 µm. When this condition is achieved, the material passes from a freely flowing material to one that is similar to a solid. A mixture of the silicate component, suitably an alkali metal silicate, and cement is added to the ballast to complement its close packing, and functions as a non-shrinking glue. The alkali metal silicate and the cement have a complementary hardening process in which the alkali metal silicate begins to harden, preferably on addition of an ester according to SE 375 978. The alkali metal silicate polymerises and reacts with the mineral, which contains hydroxyl groups, and reacts with other hydroxyl-containing chemicals. Water is released during the polymerisation, the rate of which can be controlled by means of the ester system, and the water in turn starts the hardening process of the cement, the rate of which can be controlled by choice of reactivity of the cement. This hardening in stages implies that no water is added or released during the complete process from the mixing of the new building material until the material is finally hardened. This ensures minimal shrinkage. A chemical reaction with the hydroxyl groups in the ballast occurs both during the hardening of the alkali metal silicate and during the hardening of the cement. This complementarity between layer and cement means that the material is resistant to both acid and alkali. This combined silicate /cement glue system, complemented with a load-bearing close-packed ballast system, has not been previously described in the literature.

The following composition ratios are suitable for use, depending on the main area of application:
1) General composition of material:

| | |
|---|---|
| Ballast | 60 - 90 % |
| Cement | 0.1 - 20 % |
| Silicate component | 5 - 20 % |
| Hardener | 1 - 5 % |

2) The following composition (volume percentages) is suitable for a free-flowing composition of material for use, for example, as floor levelling material:

| | |
|---|---|
| Ballast | 75 - 85 % |
| Cement | 10 - 20 % |
| Silicate component | 5 - 15 % |
| Hardener | 1 % |

3) The following composition (volume percentages) is suitable for a composition with greater viscosity, used, for example, for the production of building items such as floor skirting:

| | |
|---|---|
| Ballast | 70 - 80 % |
| Cement | 5 - 15 % |
| Reinforcement | 5 % |
| Silicate component | 5 - 15 % |
| Hardener | 1 % |

Acid can be added as an alternative to hardener, in an amount equivalent to setting the pH of the mixture to approximately 7-8.

It is appropriate that the ballast is composed of a material with hydroxyl groups available for reaction with the other components that make up the mixture. It is suitable to use material of a mineral type, such as crushed stone, sand and other conventionally used materials, but recycled material, such as crushed concrete, plaster, bricks, etc., can also be used.

A desired colour of material according to the invention can be obtained by using ballast material of a particular basic colour, without the addition of pigment. For example, minerals of different colours can be used and mixed as required in order to achieve a final product of the desired colour.

The particle size distribution curve of the material must be considered when choosing ballast, in order to achieve the desired packing or minimisation of spaces between the particles that make up the mixture. It is clear that the particle size distribution curve or the fraction profile of the ballast influences the amount of cement and silicate components that are to be used. It is appropriate to choose the particle size distribution curve of the ballast so that a condition approaching close packing is achieved.

Finally, it should be mentioned that the ballast can be composed of a special type of ballast material, or a combination of several different ballast materials. The choice of ballast depends on the type of product, the viscosity required, handling properties, method of manufacture, technical requirements on the final product such as durability, surface evenness, colour, etc. It is appropriate to choose ballast material with a particle size distribution and material hardness that ensure that the final product possesses the required hardness/load-bearing capacity in relationship to the area of application.

The basic types of cement are standard cement, aluminous cement and slag cement, for use in fractions for mixing, for example, during the manufacture of concrete or as injection cement. The grain size of cement types such as standard cement is considerably larger than that of injection cement, the specific surfaces of which are analogously considerably larger that those of conventional cement types. Different types of cement can be mixed with each other to achieve specific properties. For example, the hardening speed of standard cement can be controlled according to the invention by the addition of, for example, slag cement, which may previously have been treated, for example, with ozone for the oxidation of sulphur residue.

The cement component contributes to the particle size distribution curves of the dry ingredients, that is, it influences the degree of packing between ballast, cement and any additional ingredients. Furthermore, the cement component forms its own, complementary hardening and binding system in the final mixture and product. The cement component can be further complemented with, for example, an ettringite system if the final product so requires.

The silicate component can, according to the invention, be a basic (alkali) component of a silicate compound, such as sodium silicate, potassium silicate or lithium silicate or a mixture of these. It is appropriate to use the silicate component in the form of a solution containing water. On the other hand, alkali metal silicate can also be obtained in the form of a powder, in which case addition of water is necessary. It is preferable that the silicate component is used in the "dry form" of alkali metal silicate, that is, not in a water solution, whereby the three main components the ballast material, the cement component and the alkali metal silicate are mixed to form a "dry" mixture, without the addition of water. The hardening process can then be initiated by reducing the pH. The amount of silicate component should according to the invention be adjusted so that the amount of water that is released during the hardening process of the silicate is to a large extent taken up by the cement component during its hardening process.

The hardening system according to the invention can be composed of a suitable acid and/or an acid ester or mixtures of these, according to SE 375 978. It is appropriate to use an organic acid, such as citric acid and an ester of acetic acid. The hardening time and viscosity of the mixture can be regulated by suitable adjustment of the pH, preferably to a pH of approximately 7-8. The final hardening that is initiated by the addition of an acid ester, such as for example glyceryl triacetate, is a shorter hardening process in which the silicate component releases water, which the cement component that is included uses in its turn for its own hardening.

The different phases of the hardening system, with an initial increase of the viscosity and reduction of the pH and the final addition of an ester that follows this (for example, immediately before application) achieves a controlled interaction concerning the release of water. The result of this interaction is that the released water is provided for the cement component in an amount that is suitable for the cement hardening, and that shrinkage of the material is minimised. The process of hardening can be controlled with great precision by varying both the amount and type of cement and the amount and type of silicate component and the addition of acid and/or ester.

Other components that are included in the material composition are, for example, pigment, whose task it is to give the final product the desired colour. It is appropriate that such pigments are composed of environmentally friendly substances, such as vegetable pigments, mineral pigments, etc. It is appropriate that pigmenting is achieved by the choice of a suitable ballast component. Metal oxides can also provide pigment according to the invention. A suitable example is titanium dioxide, a commonly occurring white pigment. The chosen pigment can in certain cases provide a reinforcing element by reacting with or binding to either the silicate component or the cement component. Metal oxides can also be used as additives that retard or promote the hardening. Oxides can also compose part of the particle size distribution curve of the material composition, according to the invention; that is, they may influence the degree of close packing.

A further material component that it is appropriate to include in the composition of the material may be reinforcing material, for example, glass fibre or other hydroxyl-containing fibres. These can be present as individual fibres or in the form of woven pieces or mats. The reinforcing material can be chosen from such materials that simultaneously function as pigment, for example, wollastonite which gives a light grey mixture. Furthermore, the reinforcing material can be chosen to achieve a structural effect, such as a woven surface.

A process for production of a material composition according to the present invention can include the mixing of the solid components, such as ballast, cement and reinforcing material, followed by the addition of the silicate component. The mixture then becomes to a lesser or greater extent viscous (thixotropic) depending of the amount of silicate component and the area of exposure of the ballast and cement that are included. The hardening is then controlled by addition of an acid and/or a suitable ester, for example, glyceryl triacetate. A suitable acid, for example citric acid, can also be added to the silicate component in order to lower its pH before it is added to the dry ingredients. The hardening process of the silicate is accelerated by the following addition of an acid ester, on which the released water is absorbed by the cement for its hardening.

The actual process of hardening, thus, is characterised partly by there being two different open periods, that is, periods during which certain operations can be carried out, such as mixing, storage or application, and partly by there being two different hardening systems. The first open period consists of the period from the mixing of the silicate component with the solid components until the mixture has somewhat solidified, but can still to a certain extent be regarded as liquid. During this first open period the actual preparation, such as packaging, storage, transport, etc., can be carried out, and this period can be in the interval from around 24 hours to several weeks.

If an acid ester should be added, a second open period is obtained, during which the material can be formed, applied or treated in another manner. This open period can be controlled to a large extent by the choice and concentrations of the components that are included, and is in the interval from a few seconds to several hours. The hardening process during this second open period is characterised by a very rapid stiffening of the material.

According to one embodiment of the invention, a concrete surface onto which a floor levelling material according to the invention is to be spread is pre-treated with a silicate component. A very good binding between the concrete and the applied levelling material is achieved in this way.

According to an embodiment of the invention, a material composition can be used for the production of skirting which, particularly when used in combination with a floor levelling compound according to the invention, provides major advantages. Skirting according to the invention shows advantages that include the following: the material is similar to concrete and compatible with the floor /the levelling compound, shows no clear boundary to the material of the floor, furthermore, the material is strong and hardens rapidly. It is appropriate that a material composition for use of the moulding of floor skirting is provided with reinforcing material, for example, glass fibre, mixed into it.

The material composition according to the invention can be advantageously varied somewhat in order to adapt it to use, for example, in the home, the office, public environments or an industrial environment.

Depending on the area of application /environment, the material can be adapted with respect to its durability, surface structure, colour, chemical resistance, etc.

According to one embodiment of the invention, the material can be subjected to a rapid increase in the temperature or a rapid reduction of the pressure during the manufacturing process. In this way, parts of the moisture that is included are converted to gas, and a porous product is obtained. This product can then be used as a fire-resistant insulation, for example, or a fire-resistant building material with a certain bearing-capacity.

One advantage of the material according to the invention is that it is a material similar to concrete, which makes it easy to handle any building waste or demolition material that may arise. Conventional flooring materials contain several layers, including layers that contain polymer materials, and other materials. This makes it difficult to make use of and to recycle the material. On the other hand, a floor levelled with a material according to the invention can be broken into small pieces without difficulty, and the rubble obtained in this way can be used as the ballast material in new compounds.

An additional advantage of the material according to the invention is that properties such as colour and structure can be easily built into a surface that is similar to that of concrete, without the need of adding a colour layer or laminate. For example, components that give colour and/or structure can be added in a way that gives the final surface a marbled or shaded appearance.

Due to the fact that the properties of the material composition in its unhardened state and the hardening time can be varied within a wide range, the material can also be used for filling cracks and for reinforcing the surrounding rock during, for example, the building of a tunnel in porous or brittle rock, or rock that is rich in ground water. The composition of the material can be easily adapted so that it provides a thixotropic mixture with a short hardening time, a mixture that is viscous but that can still be pumped, suitable for injection into cracks.

Particularly noteworthy advantages of the material according to the invention are its low cost of production and the absence of any components that are dangerous to health or allergenic.

The present invention also concerns a method for the production of a building material, in which a ballast material, a cement component and possibly an additional component are mixed, after which a silicate component is added and hardening is initiated in two stages; reduction of the pH of the mixture by the addition of an acid and addition of an ester, for example, glyceryl triacetate.

The invention will be illustrated in the form of production examples, but these should not be seen as limiting the extent of the invention.

### Examples

1. Floor levelling material: A floor levelling material was produced according to the following recipe (volume percentages):

| | |
|---|---|
| Mineral (crushed quartz) | 80 % |
| Cement | 10 % |
| Silicate component | 10 % |
| Hardener | 1 % |

The silicate component consisted of 40 % potassium silicate and 60 % lithium silicate.
The dry ingredients were mixed first. Hardening was initiated by the addition of 10 g ester per kg of mixture. The mixture was spread out over an untreated concrete surface. The mixture after hardening exhibited an even surface, resistant to mechanical influence. Strong adhesion to the underlying surface was measured.
2. Floor levelling material: A floor levelling material was produced according to the following recipe (volume percentages):

| | |
|---|---|
| Mineral (crushed quartz) | 75 % |
| Cement | 20 % |
| Silicate component | 5 % |
| Hardener | 1 % |

The dry ingredients were mixed first. Hardening was initiated by the addition of 10 g ester per kg of mixture. The mixture was spread out over an untreated concrete surface. The mixture after hardening exhibited an even surface, resistant to mechanical influence. Strong adhesion to the underlying surface was measured.
3. Material for moulding of building items: A material for the moulding of building items such as floor skirting was produced according to the following recipe (volume percentages):

| | |
|---|---|
| Ballast (quartz sand) | 75 % |
| Cement | 15 % |
| Glass fibre | 5 % |
| Silicate component | 5 % |
| Hardener | 1 % |

The dry components, including the reinforcing material, were mixed first. A silicate component was adjusted to a suitable pH by addition of acid, and worked into the mixture. Hardening was initiated by the addition of a certain amount of ester per kg of mixture. Test specimens were produced by pouring the mixture into moulds with the dimensions
4. Material for moulding of building items: A material for the moulding of building items such as floor skirting was produced according to the following recipe (volume percentages):

| | |
|---|---|
| Ballast (quartz sand) | 70 % |
| Cement | 10 % |
| Glass fibre | 5 % |
| Silicate component | 15 % |
| Hardener | 1 % |

5. Compressive strength
Cubes of dimension 20 x 20 x 20 mm were sawn from hardened material according to the recipe given in Example 1 and were subjected to compressive strength testing at the "Cement och Betong Institutet, CBI" ("The Swedish Cement and Concrete Research Institute") and followed in principle Swedish standard SS 137510 (a standard for sawn cubes does not exist). A compressive strength of 22.5 MPa was measured.
6. Adhesion
Concrete slabs onto which a floor levelling compound according to the recipe given in Example 1 had been laid were examined at the "Cement och Betong Institutet, CBI" ("The Swedish Cement and Concrete Research Institute") according to SS 137243. The following adhesions were measured for three specimens applied to untreated concrete: 1.4 MPa, 2.0 MPa and 2.7 MPa. Three specimens were examined in which the concrete had been pre-treated with silicate component. A adhesion of 3.7 MPa was measured for one of these. In the other two cases, tensile fracture occurred in the concrete base, showing that the adhesion is stronger that the tensile strength of the concrete base. This latter was measured at 4.2 MPa. It can be mentioned for comparison that a tensile strength of the order of 0.8 MPa is considered to be good.
Although the invention has been described with reference to preferred embodiments, which compose the most suitable embodiments that the inventors are currently aware of, it must be understood that various changes and modifications which are apparent for one skilled in the art can be carried out without deviating from the extent of the invention as this is described in the attached claims.

## Claims

1. Composition for production of alkali- and acid-resistent floor levelling material or for building items, **characterised in** the essential components comprising the following relative volume percentage:
a) 60-90 % ballast material with a particle size distribution curve for approaching close packing;
b) 5-15 % dry cement,
c) 5-20 % Na-, K- or Li-silicate water solution or mixtures thereof;
d) 1-5% hardener of preferbly an organic acid and/or an ester.

2. Composition according to claim 1, **characterised in** the ballast material comprising a load-bearing substance containing hydroxyl groups.

3. Composition according to claims 1-2 **characterised in that** the ballast material is mainly composed of finely dispersed, recycled building material such as crushed concrete, plaster or brick.

4. Composition according to claim 1, **characterised in that** the hardener is composed of an acetic ester, such as glyceryl triacetate.

5. Composition according to any preceding claims, **characterised in that** the composition includes an additive.

6. Composition according to claim 5, **characterised in that** the additive is a pigment.

7. Composition according to claim 5, **characterised in that** the additive is a reinforcing agent, suitably glass fibre.

8. Composition according to claim 7, **characterised in that** the amount of reinforcement is 5%.

9. Procedure for production of a building material, **characterised in that**
a) 60-90 (volume) % ballast material;
b) 5-15 % cement are mixed; optionally with an additive, then
c) 5-20 % aqeous Na-, K- or Li-silicate or mixtures thereof are added , and subsequently a two step hardening is induced by
d) addition to a total amount of 1-5 % of a preferably organic acid for pH reduction to suitably 7-8, and the addition of an ester.

10. Procedure according to claim 9, **characterised in that** the ester is glyceryl triacetate.

11. Procedure according to claim 9 and 10, **characterised in that** the acid is citric acid.

12. Procedure according to any of claims 9-11,**characterised in that** after the addition of an ester, the temperature is sufficently increased to gasification of the water included in the mixture.

## Patentansprüche

1. Zusammensetzung für die Herstellung von Alkali- und säureresistentem Material für das Glätten von Böden oder für das Ausbilden von Gegenständen, **dadurch gekennzeichnet, dass** die wesentlichen Bestandteile die folgenden relativen Volumenprozentanteile aufweisen:
a) 60-90% Ballastmaterial mit einer einer dichten Packung nahekommenden Partikelgrössenverteilungskurve;
b) 5-15% trockener Zement,
c) 5-20% wässrige Na-, K- oder Li-Silikatlösung oder Mischungen daraus;
d) 1-5% Härter, vorzugsweise eine organische Säure und/oder ein Ester.

2. Zusammensetzung gemäss Anspruch 1, **dadurch gekennzeichnet, dass** das Ballastmaterial eine lasttragende Substanz, die Hydroxylgruppen aufweist, enthält.

3. Zusammensetzung gemäss Ansprüchen 1-2, **dadurch gekennzeichnet, dass** das Ballastmaterial hauptsächlich aus einem fein verteilten, rezyklierten Baumaterial wie zermahlenem Beton, Putz oder Ziegel zusammengesetzt ist.

4. Zusammensetzung gemäss Anspruch 1, **dadurch gekennzeichnet, dass** der Härter aus einem Essigsäureester wie Glyzerintriacetat zusammengesetzt ist.

5. Zusammensetzung gemäss einem der vorangehenden Ansprüche, **dadurch gekennzeichnet, dass** die Zusammensetzung ein Additiv enthält.

6. Zusammensetzung gemäss Anspruch 5, **dadurch gekennzeichnet, dass** das Additiv ein Pigment ist.

7. Zusammensetzung gemäss Anspruch 5, **dadurch gekennzeichnet, dass** das Additiv ein verstärkendes Wirkmittel ist, geeigneterweise Glasfiber.

8. Zusammensetzung gemäss Anspruch 7, **dadurch gekennzeichnet, dass** der Anteil an Verstärkung 5% ist.

9. Verfahren für die Herstellung eines Baumaterials, **dadurch gekennzeichnet, dass**:
a) 60-90 (Volumen-)% Ballastmaterial; und
b) 5-15% Zement gemischt werden; optional mit einem Additiv, dann
c) 5-20% wässrige Na-, K- oder Li-Silikatlösung oder Mischungen daraus zugefügt werden, und danach eine Zweischritthärtung herbeigeführt wird durch
d) Hinzufügen bis zu einem Gesamtanteil von 1-5% einer vorzugsweise organischen Säure für eine pH-Erniedrigung auf geeigneterweise 7-8 und das Hinzufügen eines Esters.

10. Verfahren gemäss Anspruch 9, **dadurch gekennzeichnet, dass** der Ester Glyzerintriacetat ist.

11. Verfahren gemäss Anspruch 9 und 10, **dadurch gekennzeichnet, dass** die Säure Zitronensäure ist.

12. Verfahren gemäss einem der Ansprüche 9-11, **dadurch gekennzeichnet, dass** nach dem Zufügen eines Esters die Temperatur genügend erhöht wird für eine Verdampfung des in der Mischung enthaltenen Wassers.

## Revendications

1. Composition pour la fabrication de matériau résistant aux alcalis et aux acides pour le nivellement de sols ou la construction d'élément, **caractérisé en ce que** les composants essentiels comprennent des pourcentages en volume relatifs suivants:
a) 60-90% de matériau de ballast avec une courbe de distribution de dimension de particules se rapprochant d'un compactage/tassement dense;
b) 5-15% de ciment sec;
c) 5-20% de solution aqueuse de silicate de Na, K ou Li ou des mélanges de celle-ci;
d) 1-5% de durcisseur, de préférence un acide organique et/ou un ester.

2. Composition selon la revendication 1, **caractérisée en ce que** le matériau de ballast comprend une substance porteuse contenant des groupes hydroxiles.

3. Composition selon les revendications 1-2, **caractérisée en ce que** le matériau de ballast est composé essentiellement d'un matériau de construction à dispersion fine et recyclé tel que béton concassé, crépi ou tuile.

4. Composition selon la revendication 1, **caractérisée en ce que** le durcisseur est composé d'un ester acétique, tel que la triacétate de glycérine.

5. Composition selon l'une des revendications précédentes, **caractérisée en ce que** la composition comprend un additif.

6. Composition selon la revendication 5, **caractérisée en ce que** l'additif est un pigment.

7. Composition selon la revendication 5, **caractérisée en ce que** l'additif est un agent de renforçage, de manière appropriée de la fibre de verre.

8. Composition selon la revendication 7, **caractérisée en ce que** le taux de renforcement est de 5%.

9. Procédé pour la fabrication d'un matériau de ballast, **caractérisé en ce que**:
a) 60-90 (en volume)% de matériau de ballast;
b) 5-15% de ciment sont mélangés; de manière optionnelle avec un additif, puis
c) 5-20% de solution aqueuse de silicate de Na, K ou Li ou de mélanges de celle-ci sont ajoutés et, subséquemment, un durcissement en deux étapes est induit par
d) addition d'un acide, de préférence organique, jusqu'à un total de 1-5% pour la réduction du pH, de façon appropriée à 7-8, et par addition d'un ester.

10. Procédé selon la revendication 9, **caractérisé en ce que** l'ester est le triacétate de glycérine.

11. Procédé selon les revendications 9 et 10, **caractérisé en ce que** l'acide est l'acide citrique.

12. Procédé selon l'une quelconque des revendications 9-11, **caractérisé en ce qu'**après l'addition d'un ester la température est suffisamment augmentée pour la vaporisation de l'eau contenue dans le mélange.
